# EUROPEAN PATENT APPLICATION

(11) **EP 4 265 418 A1**
(43) Date of publication of application: **25.10.2023**
(21) Application number: 23165466.6
(22) Date of filing: 30.03.2023
(51) Int. Cl.: B32B 38/06, B27N 3/04, B27N 3/18, B27N 3/20, B27N 7/00, B30B 9/28, B30B 15/02, B30B 15/06, B27M 3/00, B27M 3/18

(54) **METHOD FOR MANUFACTURING A WOOD-TOPPED COVERING PANEL WITH A BEVELLED EDGE**

(30) Priority: 22.04.2022 NO 20220456
(71) Applicant: Beaulieu International Group NV, 8790 Waregem (BE)
(72) Inventor: Årnes, Dag, 4580 Lyngdal (NO); Hausvik, Tor Inge, 4580 Lyngdal (NO); Hindersland, Leif Kåre, 4580 Lyngdal (NO)
(74) Representative: Håmsø Patentbyrå AS

(57) **Abstract**

A method for manufacturing of a wood topped covering panel (200) with a bevelled edge (250) from a workpiece (200') comprising a substrate (240') and a wooden top layer (230'), the method comprising the steps of: providing a workpiece (200') comprising a front side, a back side and a plurality of side edges, the workpiece (200') further comprising a substrate (240') and a wooden top layer (230') with a thickness, wherein the front side comprises the wooden top layer (230'); providing a pressure apparatus comprising: a press (330) and a press plate (310) provided with a work surface (310A) configured to engage the workpiece (200') and at least one extended press-height (311) protruding from the work surface (310A) by a height greater than the thickness of the wooden top layer (230') and comprising an oblique surface (312) adapted to emboss a surface, the oblique surface (312) provided at an angle relative to the work surface (310A) of between 10 and 30 degrees; heating the press (330) to between 40 and 100 degrees Celsius; positioning the workpiece (200') onto the press plate (310) such that the front side faces the press plate (310) and the back side faces the press (330); moving the press (330) towards the press plate (310) such that the press-height (311) embosses the wooden top layer (230') and the substrate (240') of the workpiece (200') for between 1 second and 5 minutes to form an extended groove (231') in the wooden top layer (230') and the substrate (240'); transferring the workpiece (200') from the pressure apparatus to a milling machine; and removing material from a side edge (210') adjacent the extended groove (231') to form a wood topped covering panel (200) with a finished side edge comprising a bevel (250), wherein the substrate (240) is not exposed at the bevel (250).

## Description

### FIELD

The present invention relates to a manufacturing process for forming a bevelled edge in a wood-topped covering panel and associated apparatus used in the method. The invention is not limited to, but finds particular utility in, the manufacture of wood-covered flooring panels such as wood veneer floor panels or parquet floor panels.

### BACKGROUND

Covering panels are used in many applications to cover structural and utility features of a building. Covering panels are very commonly used to provide an aesthetic flooring in buildings. One popular type of covering panel for such use is wooden flooring panels which are usually cut in long rectangular sections and laid in geometric patterns.

In standard manufacturing processes to produce wooden flooring, the source planks are cut from kiln dried wood. The planks are rectangular and have straight edges. Wooden flooring can generally be divided into two categories, namely unsealed wooden flooring and pre-finished wooden flooring. In unsealed wooden flooring, the planks may be laid in place next to each other with slight discrepancies in the height of the edges of each plank. This can be accommodated for by simply sanding the flooring before sealing it with an oil or lacquer. However, in pre-finished wooden flooring, the oil or lacquer is already applied to each plank when the plank is manufactured, therefore discrepancies in height cannot be accommodated for by sanding and sealing. Instead, manufacturers form a small bevel at the edges of the plank which will lay adjacent similar edges of other planks.

Bevels have also been used as a design feature to accentuate the planks. In some wood, primarily wood without knots or a pronounced grain, the planks can appear to all merge together when laid as a floor covering. The bevelled edges of adjacent planks creates a groove between the planks which can help to define the individual planks better which may lead to a more aesthetically pleasing finish in some contexts.

Bevels are typically formed by milling away a small portion of material at an angle at the edge of the plank, which may then be painted or varnished to match the appearance of the main top surface of the plank and to protect the bevel from wear and moisture. Where the flooring comprises a surface layer of several sheets of paper including decorative paper and resin, the surface layer is typically very thin. After milling of a bevel, the layer below the surface film is visible and even after painting or varnishing, the material at the bevel will not look identical to the material on the surface of each plank. Furthermore, the milled bevel has a very small width, so paint or varnish must be added with a precision of a tenth of a millimetre. The painting or varnishing step also adds an additional process step in the manufacturing process of producing a covering panel such as a floor panel with a bevelled edge.

Patent document WO2017/001976A1 discloses a floor panel and a method for manufacturing a floor panel including compressing or indenting a bevel in a veneer layer. In wooden veneer and parquet flooring, it is particularly challenging to form a bevel in the top layer of the flooring without cracking the top layer.

Current trends in covering panel manufacturing are towards thinner wooden top layers. This is due to the rising cost of real woods such as oak. Manufacturers must address the problem of keeping raw material costs low, i.e. by using thinner sheets of real wood, whilst still providing a bevel without cracking the wooden top layer or exposing the layer below thereby showing that the covering panel actually only has a very thin layer of real wood.

It is an object of the invention to remedy or to reduce at least one of the drawbacks of the prior art, or at least provide a useful alternative to the prior art.

### SUMMARY

The invention is defined by the independent patent claims. The dependent claims define advantageous embodiments of the invention.

According to a first aspect of the invention, there is provided a method for manufacturing of a wood topped covering panel with a bevelled edge from a workpiece comprising a substrate and a wooden top layer, the method comprising the steps of: providing a workpiece comprising a front side, a back side and a plurality of side edges, the workpiece further comprising a substrate and a wooden top layer with a thickness, wherein the front side comprises the wooden top layer; providing a pressure apparatus comprising: a press and a press plate provided with a work surface configured to engage the workpiece and at least one extended press-height protruding from the work surface by a height greater than the thickness of the wooden top layer and comprising an oblique surface adapted to emboss a surface, the oblique surface provided at an angle relative to the work surface of between 10 and 30 degrees; heating the press to between 40 and 100 degrees Celsius; positioning the workpiece onto the press plate such that the front side faces the press plate and the back side faces the press; moving the press towards the press plate such that the press-height embosses the wooden top layer and the substrate of the workpiece for between 1 second and 5 minutes to form an extended groove in the wooden top layer and the substrate; transferring the workpiece from the pressure apparatus to a milling machine; and removing material from a side edge adjacent the extended groove to form a wood topped covering panel with a finished side edge comprising a bevel, wherein the substrate is not exposed at the bevel.

The method may reduce or eliminate cracking of the wooden top layer. The method allows a bevel to be formed in a workpiece comprising a wooden top layer. This method may produce a final product which in use is more dimensionally stable. This method may reduce the stress in the final product. The stress may be reduced to an extent that a balancing sheet may not be required, as is typically used in the prior art. Using the method, the substrate is not exposed at the bevel in the final product, therefore further steps of painting or coating an exposed substrate for aesthetic reasons and/or for protection from moisture and wear are not required. Therefore, this method is simpler. Additionally, this method may be more accurate, because painting or varnishing a very thin portion of the substrate which is exposed may be difficult. By using this method, the wooden top layer may be made thinner without risk of cracking the wooden top layer, whilst providing protection of the substrate from moisture and wear at the bevel, and whilst giving the user a perception that the wooden top layer is deeper than it actually is. In this connection, the covering panel may be produced at lower cost because less real wood is required. Additionally, a more consistent finish may be achieved in the covering panel because the bevel comprises the same wood as the top layer of the covering panel. A further advantage of the method may be that it may allow the bevel to be formed without requiring moisture to be added to the wooden top layer.

The step of heating the press may be performed before the press-height embosses the wooden top layer and the substrate of the workpiece.

The step of heating the press may comprise heating the press to between 60 and 80 degrees Celsius or around 75 degrees Celsius.

The oblique surface may be provided at an angle relative to the press plate of around 20 degrees.

The step of moving the press towards the press plate may comprise embossing the wooden top layer and the substrate of the workpiece for a period of time between 10 and 20 seconds, or around 15 seconds.

The plurality of side edges may not comprise a wooden top layer.

The press-height may engage the workpiece an offset distance from a side edge and parallel to the side edge.

The finished side edge may be one of two complementary locking profiles.

The finished side edge may have a tongue or groove profile.

The step of heating the press may further comprise a step of setting the press to a target temperature of around 90 degrees Celsius.

The press may comprise aluminium configured to contact the workpiece in use.

The press may comprise hardened steel or iron configured to contact the workpiece in use.

The method may further comprise a step of heating the press plate to between 60 and 90 degrees or between 70 and 80 degrees Celsius or around 75 degrees Celsius before the press-height embosses the wooden top layer and the substrate of the workpiece.

The step of moving the press towards the press plate such that the press-height embosses the wooden top layer and the substrate of the workpiece may further comprise maintaining the press plate at a substantially constant temperature.

The method may be such that the workpiece has a temperature of between 50 and 60 degrees Celsius or between 52 and 58 degrees Celsius, or between 54 and 56 degrees Celsius after the step of moving the press towards the press plate.

The oblique surface and the press plate may be joined by a concave surface of radius of between 2mm and 6mm or around 4mm.

The wooden top layer may have an average thickness of less than 2.5mm or between 0.2mm and 0.8mm or between 0.4mm and 0.6mm or around 0.45mm thick.

The wooden top layer may have an average thickness greater than or equal to 2.5mm.

The substrate may comprise medium-density fibreboard or high-density fibreboard.

The press-height may protrude from the work surface by between 1mm and 3mm or between 1mm and 1.4mm or around 1.2mm.

The step of moving the press towards the press plate such that the press-height embosses the wooden top layer and the substrate of the workpiece may be such that the extended groove formed has a width of between 2mm and 4mm or around 3mm.

The front side may further comprise a protective oil or lacquer.

The protective oil or lacquer may cover the wooden top layer. In such case the protective oil or lacquer may stay intact during the pressing of the bevel. The protective oil or lacquer may be at least partially absorbable in the wooden top layer. The protective oil or lacquer may be fully absorbable in the wooden top layer.

According to a second aspect of the invention, there is provided a covering panel with a bevelled edge obtained by the method of the first aspect of the invention.

The bevelled edge may have a width of between 2mm and 4mm or around 3mm.

According to a third aspect of the invention, there is provided a pressure apparatus for forming a bevel in a workpiece comprising a wooden top layer, the pressure apparatus comprising a press and a press plate provided with at least one extended press-height comprising an oblique surface adapted to emboss a surface, the oblique surface provided at an angle relative to the press plate of between 10 and 30 degrees.

The oblique surface may be provided at an angle relative to the press plate of around 20 degrees.

The press-height may protrude from the press plate by between 1mm and 3mm or between 1mm and 1.4mm or around 1.2mm.

According to a fourth aspect of the invention, there is provided use of a pressure apparatus according to the third aspect of the invention to form a bevel in a workpiece.

According to a fifth aspect of the invention, there is provided a method for manufacturing a plurality of wood topped covering panels each comprising a bevelled edge from a plurality of workpieces, wherein expansion or shrinkage of one of the workpieces relative to the other workpiece is avoided during manufacture, the method comprising the steps of: manufacturing a first wood topped covering panel according to the method of the first aspect of the invention from a first workpiece, wherein the press plate is maintained at a substantially constant temperature; and manufacturing a second wood topped covering panel according to the method of the first aspect of the invention from a second workpiece, wherein the press plate is maintained at the same substantially constant temperature, such that the expansion or shrinkage of either of the first workpiece or the second workpiece relative to the other workpiece is avoided.

### BRIEF DESCRIPTION OF THE DRAWINGS

Embodiments of the invention will now be described with reference to the following drawings, in which:
Figure 1 shows a prior art top bevel with a land;
Figure 2 shows a prior art bottom bevel with a land;
Figure 3 shows a wood topped covering panel;
Figure 4 shows a workpiece and a press-plate for forming a wood topped covering panel with a bevelled edge;
Figure 5 shows the workpiece and press-plate of Figure 4 in a different arrangement;
Figure 6 shows the workpiece and press-plate of Figure 4 with a press;
Figure 7 shows a bevel being formed on a workpiece;
Figure 8 shows the workpiece being removed from the press-plate for subsequent machining;
Figure 9 shows a workpiece comprising an extended groove in the front side;
Figure 10 shows a wood topped covering panel with a finished side edge comprising a bevel; and
Figure 11 shows a detailed view of the press-plate.

For clarity reasons, some elements may in some of the figures be without reference numerals. A person skilled in the art will understand that the figures are just principal drawings. The relative proportions of individual elements may also be distorted.

### DETAILED DESCRIPTION OF THE DRAWINGS

Identical reference numerals indicate identical or similar features in the drawings. The drawings are presented in a simplified and schematic manner, and the features therein are not necessarily drawn to scale. In the figures, same or corresponding elements are indicated by same reference numerals. For clarity reasons, some elements may in some of the figures be without reference numerals. A person skilled in the art will understand that the figures are just principal drawings. The relative proportions of individual elements may also be distorted.

Any positional indications refer to the position shown in the figures. As used here, the terms "up" and "down"; "upper" and "lower"; "upwardly" and "downwardly"; "below" and "above"; "top" and "back"; and other similar terms indicating relative positions above or below a given point or element may be used in connection with some implementations of various technologies described herein.

As used here, the terms "wood" and "wooden" refer to naturally occurring fibrous material from a tree. This material may be worked or treated after being produced from the tree and this resulting product still has a wood structure and may still be referred to as "wood" or "wooden". In this connection, paper materials are not regarded as "wood" in the present disclosure. For example, paper-based laminates imitating natural wood are not to be regarded as "wood" or "wooden" in the present disclosure. In this connection, it is generally accepted that wood-based materials still comprising a wood structure generally are more desirable, have a superior look and protection against impacts and moisture. However, wood-based materials still having a wood structure are more brittle than paper laminates especially when produced to be thin. Additionally, they are less deformable than paper laminates. The term "layer" is used to refer to the structural materials of a workpiece or covering panel other than oils or lacquers coated on the uppermost surface. A person skilled in the art will know that oils or lacquers may be coated on the workpiece or covering panel in liquid or mist form and may be cured or left to set on the surface of the workpiece or covering panel, however this is not referred to as a "layer" of the workpiece or covering panel in the present disclosure. For example, where a workpiece has a substrate and a wooden layer adjacent the substrate, the workpiece is considered in the present disclosure to comprise two layers, regardless of a coating of oil or lacquer on the surface of the wooden layer.

The term "bevel" is used herein to mean a formed edge on a workpiece or covering panel that is not perpendicular to the faces of workpiece or covering panel. In general usage bevel and chamfer are sometimes interchanged, whilst in technical language bevels and chamfers are typically used to describe different formations. A bevel may be used in technical language to describe an obliquely inclined edge running from a top surface of a piece of wood to a bottom surface. In this connection, the obliquely inclined edge forms the entire edge surface of that piece of wood. Whereas a chamfer may describe a short obliquely inclined edge formed to connect a side of the piece of wood with a top or bottom surface, whilst still maintaining an edge which is substantially perpendicular to the top or bottom surface. The terminology used herein is therefore firstly clarified. Throughout the present description, reference will be made only to bevels, i.e. to "a bevel", "the bevelled edge", "bevelled surface" etc. and is intended to mean what may in some contexts be described as a top bevel with a land or a bottom bevel with a land.

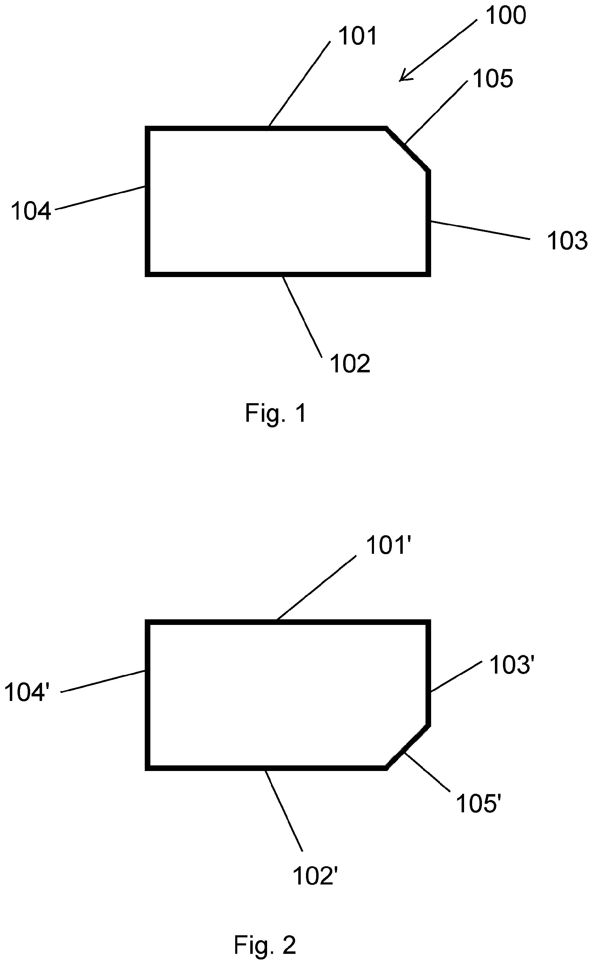

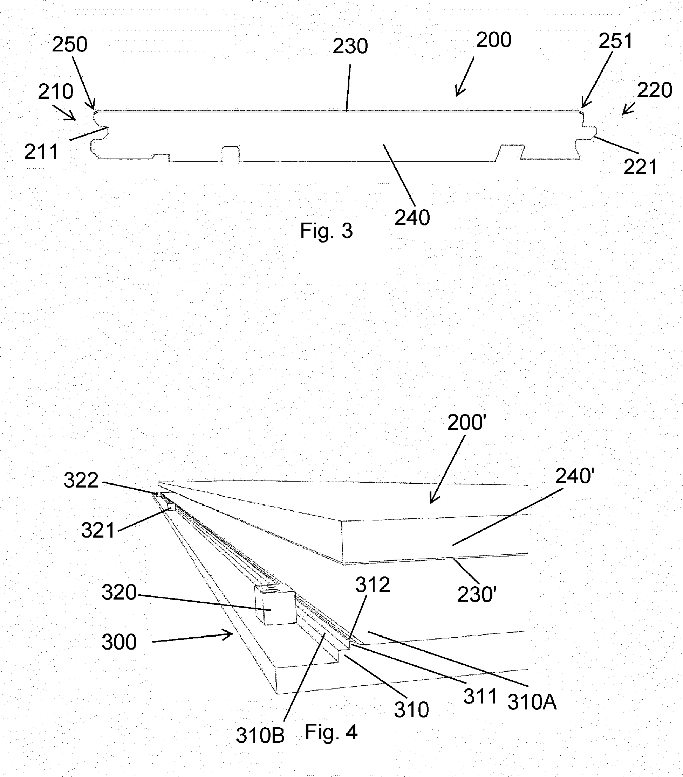

Referring firstly to Figure 1, there is shown a first prior art workpiece 100 which comprises a top surface 101, a bottom surface 102, and first 103 and second 104 side surfaces. The workpiece 100 comprises a bevel 105 which connects the first side 103 to the top surface 101. The bevel 105 is a top bevel with a land. Referring now to Figure 2, there is shown a second prior art workpiece 100' which comprises a top surface 101', a bottom surface 102', and first 103' and second 104' side surfaces. The workpiece 100' comprises a bevel 105' which connects the first side 103' to the bottom surface 102'. The bevel 105' is a bottom bevel with a land. The bevels 105, 105' shown in Figures 1 and 2 are such that there is still a first side edge 103, 103', as opposed to the bevel 105, 105' connecting the top surface 101 and bottom surface 102 and thereby removing the side edge 103, 103' completely. It is important to maintain a side edge in locking covering panel manufacturing, as the side edge is used to form a locking profile which mates and locks with a corresponding locking profile on an adjacent panel in use in a locking system as will now be described in more detail with reference to Figure 3. In so called "glue down systems" there is no requirement to form a locking profile on the side edges, as the covering panels can be glued directly to the subfloor instead of being locked together.

Figure 3 shows a wood topped covering panel 200 according to the invention. The panel 200 shown is a component of a floor covering. However, the panel 200 may usefully also be used for covering a wall, a ceiling structure or any other internal surface of a room or building. In this connection, to provide a complete covering, a myriad of panels 200 are typically arranged adjacent each other. The covering panel 200 comprises a first finished side 210 and a second finished side 220. The panel 200 is provided with a first locking profile 211 on the first side 210 and a second locking profile 221 on the second side 220. In the example shown, the first locking profile 211 is a female recess and the second locking profile 221 is a male extrusion.

It will easily be understood that when the panel 200 is laid adjacent another similar panel, the male extrusion of one panel will lock in the female recess of the other panel. In this way, a complete floor covering can easily be formed from a myriad of panels 200. It is therefore essential that a locking profile 211, 221 can be formed on the first 210 and second 220 side edges of a covering panel 200 when the covering panel 200 is used in an interlocking system rather than a glue down system, thereby allowing the forming of a useful floor, or other surface, covering.

The covering panel 200 comprises a wooden top layer 230 upon a substrate 240. The wooden top layer 230 is provided such that an aesthetically pleasing finish is provided to the covering panel 200. The wooden top layer 230 may also provide particular wear characteristics selected for the application in which the covering panel 200 may be used. For example, in busy office lobbies a particularly hard-wearing wooden top layer 230 may be appropriate.

The substate 240 may be a material suitably selected to act as a stable carrier material for the wooden top layer 230. In the presently described example, the substate 240 is high-density fibreboard. In other examples other suitable substate materials may be selected, such as but not limited to medium-density fibreboard, for example. As can be seen in Figure 3, the substrate 240 may constitute a major portion of the cross-sectional depth of the panel 200. The wooden top layer 230 may have an average thickness of between 0.2mm and 0.8mm. Typically, the wooden top layer 230 may have an average thickness of less than 2.5mm or between 0.4mm and 0.6mm, or most preferably, but not essentially, around 0.45mm. Alternatively, the wooden top layer 230 may have an average thickness greater than or equal to 2.5mm.

Still referring to Figure 3, it can be seen that the panel 200 further comprises a first bevelled edge 250 and a second bevelled edge 251 in the substrate 240 and wooden top layer 230, the formation of which will now be explained.

An example of a method of forming a wood topped covering panel 200 with a bevelled edge is shown in Figures 4 to 10. The example method describes forming a wood topped covering panel 200 from an initial workpiece 200'. The workpiece 200' has a wooden top layer 230'.

As previously discussed, the wooden top layer 230' is described as a "top layer" because when the workpiece 230' is finally formed into a covering panel 200, there is an outermost layer which is intended to face the user, i.e. the surface the user would walk on if the covering panel 200 is a flooring for example. Therefore, it will be understood that the workpiece 200' shown in Figure 4 has simply been inverted such that the wooden top layer 230' is facing downwards. The inversion is due to the arrangement of other components in the method. It will easily be understood that a simple rearrangement of the components may allow the covering panel 200 to be formed in the method without inversion of the workpiece 200' as will be explained later. In the present disclosure, the side of the workpiece comprising the wooden top layer 230' is referred to as the front side.

Referring still to Figure 4, an exemplary pressure apparatus 300 is provided. The pressure apparatus 300 comprises a press plate 310 for positioning the workpiece 200' upon. The press plate 310 is provided with at least one extended press-height 311 for providing the embossing of the workpiece 200'. The press plate 310 comprises a substantially flat top surface comprised of a first portion 310A and a second portion 310B, apart from the press-height 311 and any retainment features configured to hold the workpiece 200' in the correct position on the press plate 310. In the presently described example, retainment features in the form of a plurality of fixtures 320, 321, 322 are provided. The fixtures 320, 321, 322 provide a border around the press-plate 310 such that the workpiece 200' will be correctly positioned in use.

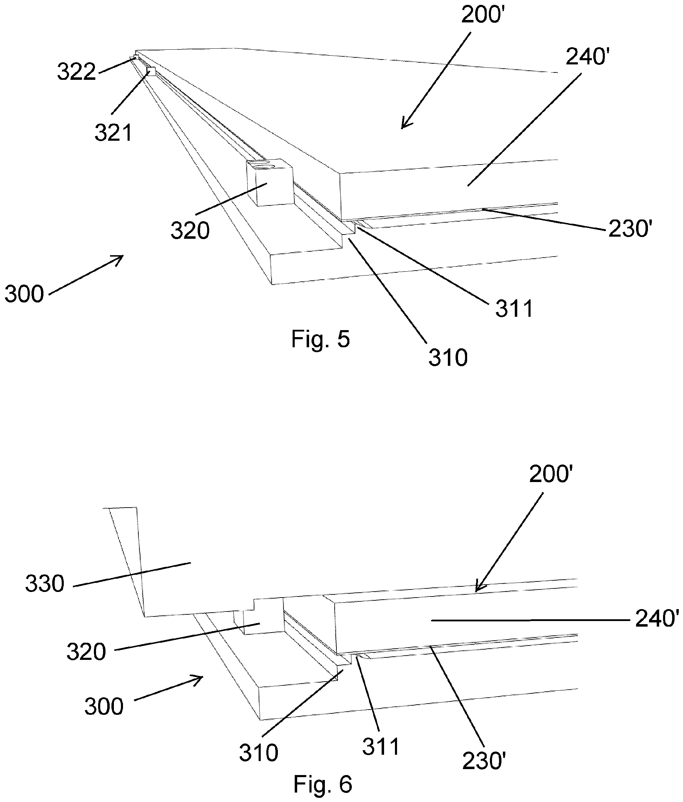

Therefore, using the fixtures 320, 321, 322, a workpiece 200' is positioned on the press plate 310 such that the wooden top layer 230' of the work piece 200' is either adjacent and already abutting the press-height 311 of the press plate 310, or is arranged such that the wooden top layer 230' will be brought into engagement with the press-height 311 in the subsequent step, i.e. brought into engagement from a spaced configuration, as shown in Figure 4. The workpiece 200' positioned already abutting the press-height 311 of the press plate 310 is shown in Figure 5.

Referring now to Figure 6. Regardless of the positioning mentioned above, the pressure apparatus 300 further comprises a press 330 configured to apply pressure to the workpiece 200' to press the workpiece 200' into the press-height 311 such that the workpiece 200' becomes embossed. At the same time, the front side of the workpiece 200' is brought into engagement with the first portion 310A of the top surface of the press-plate 310, at which point the embossing may be stopped because the workpiece 200' cannot be pressed any further. The first portion 310A may be referred to as a work surface because of the interaction of the first portion 310A with the workpiece 200' during the method. The pressure may be applied to the workpiece 200' for between 1 second and 5 minutes. More preferably, the pressure may be applied to the workpiece 200' for between 10 and 20 seconds, most preferably for around 15 seconds.

As previously mentioned, in alternative examples the press 330 may be in the position of the press-plate 310 and the press-plate 310 may be in the position of the press 330 in the exemplary Figures. Other arrangements, such as the workpiece 200' being provided vertically arranged rather than horizontally arranged as in the exemplary Figures may also be utilised in some alternative examples. The press 330 may be provided in a plurality of different forms, as will be apparent to the skilled person and is well known in the art. Before the pressing of the workpiece 200' into the press-height 311, the press 330 is heated to between 40 and 100 degrees Celsius, more preferably to between 60 and 80 degrees Celsius, or most preferably to around 75 degrees Celsius. It does not matter if the press 330 is heated before the workpiece 200' is positioned on the press-plate 310 or after the workpiece 200' is positioned on the press-plate 310. In either case, the press 330 is brought towards the press-plate 310 such that the press-height 311 embosses the workpiece 200'. It is sufficient that the press 330 is heated to between 40 and 100 degrees Celsius before the press 330 pushes the workpiece 200' down onto the press-height 311.

The press 330 may comprise a material suitable for transferring heat to the workpiece 200'. In this connection, the press 300 may comprise aluminium and/or hardened steel and/or iron configured to contact the workpiece 200' in use. In this connection, when materials such as aluminium are used heat may be lost in the press 330 by dissipation into the air. Therefore, it may be desirable set the heating of the press 330 to a target temperature of around 90 degrees Celsius for example, such that the actual temperature of the press 330 may be around 75 degrees Celsius, when such heat dissipating materials are used.

In some examples, the press-plate 310 may also be heated to between 60 and 90 degrees Celsius, more preferably between 70 and 80 degrees Celsius, most preferably around 75 degrees Celsius, before the press-height 311 engages and embosses the front side of the workpiece 200'.

The workpiece 200' may therefore be heated by heating of the press-plate 310 and/or the press 300, or by another external source. It is desirable to heat the workpiece 200' such that after the step of moving the press 330 towards the press-plate 310, the workpiece 200' has a temperature of between 50 and 60 degrees Celsius.

Regardless of if the press-plate 310 is heated to an elevated temperature as described above, it is preferable to maintain the press-plate at a substantially constant temperature during the application of pressure to the workpiece 200'.

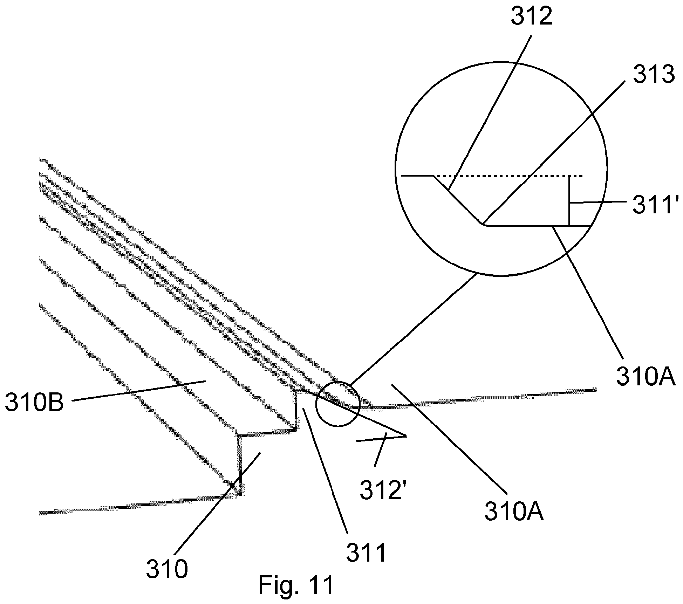

The press-height 311 shown in the example in Figures 4 to 11, and best seen in Figures 4 and 11, is a straight press-height 311 running across a dimension of the press-plate 310. It will be understood that, depending on the shape and configuration of the workpiece 200' and the shape and configuration desired of the covering panel 200 being formed, the press-height 311 may take many forms. For example, the press-height 311 may be provided as a continuous strip forming a square or rectangle to form a similarly shaped bevel on a workpiece 200'.

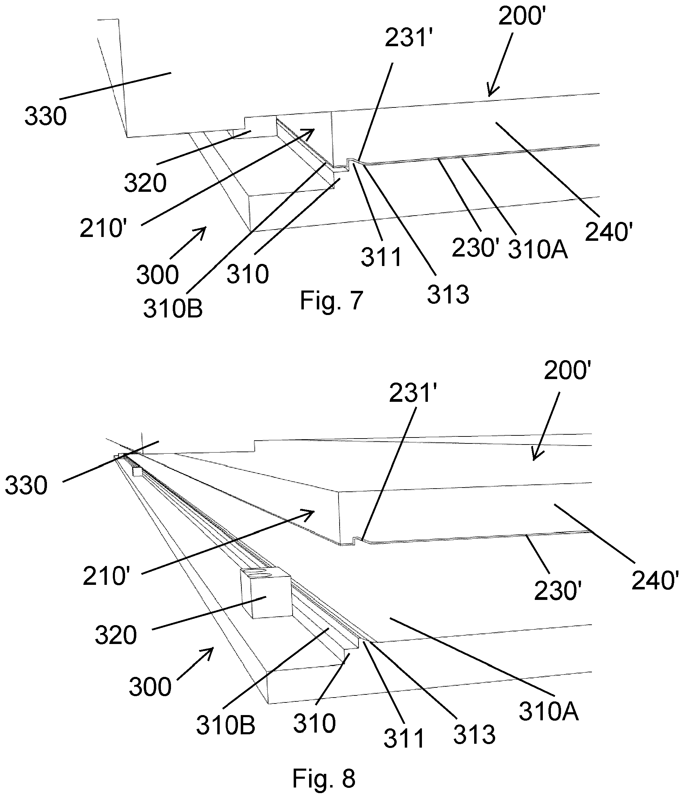

Regardless of the shape of the press-height 311, a groove 231' is formed into the substrate 240' and wooden top layer 230' as is best seen in Figure 7. The groove 231' is preferably formed an offset distance from a first side edge 210' of the workpiece 200' and preferably parallel to the first side edge 210'.

Referring to Figure 7 and Figure 11, it can be seen that in the presently described example the press-height 311 comprises a concave surface 313 of radius of between 2mm and 6mm, most preferably around 4mm. This concave surface 313 provides a smooth start to the groove 231', and thus avoids a pronounced edge which may be felt by a final user of the covering panel 200 produced.

Referring to Figure 4 and Figure 11, the press-height 311 comprises an oblique surface 312 which is provided at an angle relative to the first portion 310A of the top surface of the press-plate 310. The angle 312' of the oblique surface 312 relative to the first portion 310A of the top surface of the press-plate 310 is between 10 and 30 degrees, most preferably around 20 degrees.

The press-height 311 may protrude a height 311' from the first portion 310A of the top surface of the press-plate by between 1mm and 3mm or between 1mm and 1.4mm, most preferably around 1.2mm. It will be understood that the second portion 310B may be substantially in line with the first portion 310A or may be offset from the first portion 310A. That is to say, the height 311' of the press-height 311 is measured from the first portion 310A and the distance between the top of the press-height 311 and the second portion 310B may be the same, or different from the height 311' of the press-height 311. In this connection, as in the described example, the distance between the top of the press-height 311 and the second portion 310B is larger than the height 311' of the press-height 311, therefore the workpiece 200' may contact the first portion 310A when pressed and have a standoff distance from the second portion 310B as can be seen in Figure 7.

Still referring to Figure 7, it can be seen that the height 311' of the press-height 311 is greater than the thickness of the wooden top layer 230'. Therefore, when the workpiece 200' is pressed down on the press-height 311, both the wooden top layer 230' and the substrate 240' are embossed to form the groove 231'. In this connection, the portion of the substrate 240' which is embossed at the groove 231' is covered by the wooden top layer 230'. By forming the groove 231' in this way at this step, the bevel 250, 251 in the final product (i.e. the covering panel 200) will comprise a wooden top layer 230 covering the substrate 240, therefore subsequent steps required of painting or coating an exposed substrate 240 for aesthetic reasons and/or for protection from moisture and wear are avoided.

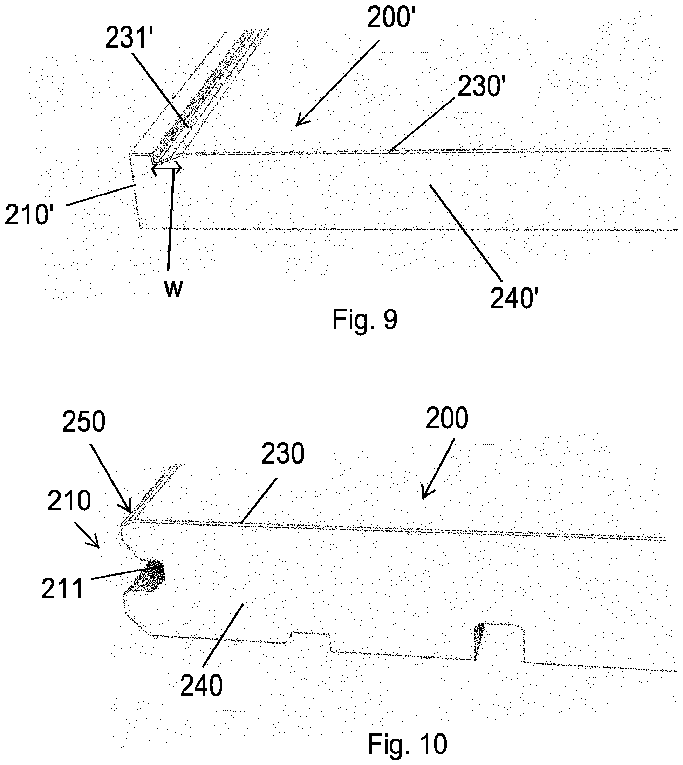

After pressing of the groove 231', the workpiece 200' is lifted from the press-plate 310 as shown in Figure 8 and transferred to a milling machine (not shown). The workpiece 200' transferred to the milling machine is shown in Figure 9, where the groove 231' can be clearly seen. The groove 231' formed has a width dimension w shown in Figure 9. It is preferably to provide a groove 231' of between 2mm and 4mm, most preferably around 3mm. In the milling machine, material between the first side edge 210' and the groove 231', as best seen in Figure 9, can be removed to form a locking profile as previously described. The resulting product of the described exemplary method is a wood topped covering panel 200 with a bevelled edge 250, as shown in Figure 10. It can clearly be seen in Figure 10 that the substrate 240 is not exposed at the bevel 250, therefore further steps required of painting or coating an exposed substrate 240 for aesthetic reasons and/or for protection from moisture and wear are not required. By using this method, the wooden top layer 230 can be made thinner without risk of cracking the wooden top layer 230, whilst providing protection of the substrate 240 from moisture and wear at the bevel 250, and whilst giving the user a perception that the wooden top layer 230 is deeper than it actually is. In this connection, the covering panel 200 may be produced at lower cost because less real wood is required. Additionally, a more consistent finish is achieved in the covering panel because the bevel 250 comprises the same wood as the top layer of the covering panel 200.

Optionally, a protective oil or lacquer may be applied to the covering panel 200 after it has been formed using the described method. Alternatively, a protective oil or lacquer may be applied to the wood topped covering layer 230' of the workpiece 200' before the wood topped covering layer 230' and substrate 240' are embossed. The protective oils or lacquers used in some examples may comprise a mix of acrylic and urethane resins. Alternatively, full acrylic may be used in some examples. Alternatively, water or solvent based polyurethane may be used in some examples. Alternatively, vegetable-based oil or wax may be used in some examples. The herein described methods allow for pressing of a lacquered or oiled wooden top layer without causing cracking or damage to the lacquer or oil. Some lacquers or oils may be at least partially absorbable in the wooden top layer. Some lacquers or oils may be entirely absorbable in the wooden top layer.

In a manufacturing process whereby hundreds, thousands or millions of covering panels 200 are produced, it is important to ensure uniform production such that any two covering panels 200 can be joined together in forming a wall or floor covering for example. In this connection, expansion or shrinkage of the workpieces used can be avoided during manufacture by maintaining the workpieces at a substantially constant temperature such that there is no expansion or shrinkage of one workpiece relative to another workpiece, or if there is any expansion or shrinkage it may be maintained within an acceptable tolerance.

In the present disclosure the described wooden top layers are not impregnated with thermosetting resin. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

### Clauses

1. A method for manufacturing of a wood topped covering panel with a bevelled edge from a workpiece comprising a substrate and a wooden top layer, the method comprising the steps of:
   - providing a workpiece comprising a front side, a back side and a plurality of side edges, the workpiece further comprising a substrate and a wooden top layer with a thickness, wherein the front side comprises the wooden top layer;
   - providing a pressure apparatus comprising:
      a press and a press plate provided with a work surface configured to engage the workpiece and
      at least one extended press-height protruding from the work surface by a height greater than the thickness of the wooden top layer and comprising an oblique surface adapted to emboss a surface, the oblique surface provided at an angle relative to the work surface of between 10 and 30 degrees;
   - heating the press to between 40 and 100 degrees Celsius;
   - positioning the workpiece onto the press plate such that the front side faces the press plate and the back side faces the press;
   - moving the press towards the press plate such that the press-height embosses the wooden top layer and the substrate of the workpiece for between 1 second and 5 minutes to form an extended groove in the wooden top layer and the substrate;
   - transferring the workpiece from the pressure apparatus to a milling machine; and
   - removing material from a side edge adjacent the extended groove to form a wood topped covering panel with a finished side edge comprising a bevel, wherein the substrate is not exposed at the bevel.
2. The method according to clause 1, wherein the step of heating the press is performed before the press-height embosses the wooden top layer and the substrate of the workpiece.
3. The method according to clause 1 or 2, wherein the step of heating the press comprises heating the press to between 60 and 80 degrees Celsius or around 75 degrees Celsius.
4. The method according to any preceding clause, wherein the oblique surface is provided at an angle relative to the press plate of around 20 degrees.
5. The method according to any preceding clause, wherein the step of moving the press towards the press plate comprises embossing the wooden top layer and the substrate of the workpiece for a period of time between 10 and 20 seconds, or around 15 seconds.
6. The method according to any preceding clause, wherein the plurality of side edges do not comprise a wooden top layer.
7. The method according to any preceding clause, wherein the step of moving the press towards the press plate is such that the press-height engages the workpiece an offset distance from a side edge and parallel to the side edge.
8. The method according to any of clauses 1 to 7, wherein the finished side edge is one of two complementary locking profiles.
9. The method according to clause 8, wherein the finished side edge has a tongue or groove profile.
10. The method according to any preceding clause, wherein the step of heating the press further comprises a step of setting the press to a target temperature of around 90 degrees Celsius.
11. The method according to clause 10, wherein the press comprises aluminium configured to contact the workpiece in use.
12. The method according to any of clauses 1 to 9, wherein the press comprises hardened steel or iron configured to contact the workpiece in use.
13. The method according to any preceding clause, further comprising a step of heating the press plate to between 60 and 90 degrees or between 70 and 80 degrees Celsius or around 75 degrees Celsius before the press-height embosses the wooden top layer and the substrate of the workpiece.
14. The method according to clause 13, wherein in the step of moving the press towards the press plate such that the press-height embosses the wooden top layer and the substrate of the workpiece further comprises maintaining the press plate at a substantially constant temperature.
15. The method according to any preceding clause, such that the workpiece has a temperature of between 50 and 60 degrees Celsius or between 52 and 58 degrees Celsius, or between 54 and 56 degrees Celsius after the step of moving the press towards the press plate.
16. The method according to any preceding clause, wherein the oblique surface and the press plate are joined by a concave surface of radius of between 2mm and 6mm or around 4mm.
17. The method according to any preceding clause, wherein the wooden top layer has an average thickness of less than 2.5mm or between 0.2mm and 0.8mm or between 0.4mm and 0.6mm or around 0.45mm thick.
18. The method according to any of clause 1 to 16, wherein the wooden top layer has an average thickness greater than or equal to 2.5mm.
19. The method according to any preceding clause, wherein the substrate comprises medium-density fibreboard or high-density fibreboard.
20. The method according to any preceding clause, wherein the press-height protrudes from the work surface by between 1mm and 3mm or between 1mm and 1.4mm or around 1.2mm.
21. The method according to any preceding clause, wherein the step of moving the press towards the press plate such that the press-height embosses the wooden top layer and the substrate of the workpiece is such that the extended groove formed has a width of between 2mm and 4mm or around 3mm.
22. The method according to any preceding clause, wherein the front side further comprises a protective oil or lacquer.
23. The method according to clause 22, wherein the protective oil or lacquer is covering the wooden top layer.
24. A covering panel with a bevelled edge obtained by the method of any of clauses 1 to 23.
25. The covering panel according to clause 24, wherein the bevelled edge has a width of between 2mm and 4mm or around 3mm.
26. A pressure apparatus for forming a bevel in a workpiece comprising a wooden top layer, the pressure apparatus comprising a press and a press plate provided with at least one extended press-height comprising an oblique surface adapted to emboss a surface, the oblique surface provided at an angle relative to the press plate of between 10 and 30 degrees.
27. The pressure apparatus of clause 26, wherein the oblique surface is provided at an angle relative to the press plate of around 20 degrees.
28. The pressure apparatus of clause 26 or 27, wherein the press-height protrudes from the press plate by between 1mm and 3mm or between 1mm and 1.4mm or around 1.2mm.
29. Use of a pressure apparatus according to any one of clauses 26 to 28 to form a bevel in a workpiece.
30. A method for manufacturing a plurality of wood topped covering panels each comprising a bevelled edge from a plurality of workpieces, wherein expansion or shrinkage of one of the workpieces relative to the other workpiece is avoided during manufacture, the method comprising the steps of:
   - manufacturing a first wood topped covering panel according to the method of any of clauses 1 to 23 from a first workpiece, wherein the press plate is maintained at a substantially constant temperature; and
   - manufacturing a second wood topped covering panel according to the method of any of clauses 1 to 23 from a second workpiece, wherein the press plate is maintained at the same substantially constant temperature,
   such that the expansion or shrinkage of either of the first workpiece or the second workpiece relative to the other workpiece is avoided.

## Claims

1. A method for manufacturing of a wood topped covering panel (200) with a bevelled edge (250) from a workpiece (200') comprising a substrate (240') and a wooden top layer (230'), the method comprising the steps of:
- providing a workpiece (200') comprising a front side, a back side and a plurality of side edges, the workpiece (200') further comprising a substrate (240') and a wooden top layer (230') with a thickness, wherein the front side comprises the wooden top layer (230');
- providing a pressure apparatus comprising:
a press (330) and a press plate (310) provided with a work surface (310A) configured to engage the workpiece (200') and
at least one extended press-height (311) protruding from the work surface (310A) by a height greater than the thickness of the wooden top layer (230') and comprising an oblique surface (312) adapted to emboss a surface, the oblique surface (312) provided at an angle relative to the work surface (310A) of between 10 and 30 degrees;
- heating the press (330) to between 40 and 100 degrees Celsius;
- positioning the workpiece (200') onto the press plate (310) such that the front side faces the press plate (310) and the back side faces the press (330);
- moving the press (330) towards the press plate (310) such that the press-height (311) embosses the wooden top layer (230') and the substrate (240') of the workpiece (200') for between 1 second and 5 minutes to form an extended groove (231') in the wooden top layer (230') and the substrate (240');
- transferring the workpiece (200') from the pressure apparatus to a milling machine; and
- removing material from a side edge (210') adjacent the extended groove (231') to form a wood topped covering panel (200) with a finished side edge comprising a bevel (250), wherein the substrate (240) is not exposed at the bevel (250).

2. The method according to claim 1, wherein the step of heating the press (330) is performed before the press-height (311) embosses the wooden top layer (230') and the substrate (240') of the workpiece (200').

3. The method according to claim 1 or 2, wherein the step of heating the press (330) comprises heating the press (330) to between 60 and 80 degrees Celsius or around 75 degrees Celsius.

4. The method according to any preceding claim, wherein the oblique surface (312) is provided at an angle relative to the press plate (310) of around 20 degrees.

5. The method according to any preceding claim, wherein the step of moving the press (330) towards the press plate (310) comprises embossing the wooden top layer (230') and the substrate (240') of the workpiece (200') for a period of time between 10 and 20 seconds, or around 15 seconds.

6. The method according to any preceding claim, wherein the step of heating the press (330) further comprises a step of setting the press (330) to a target temperature of around 90 degrees Celsius.

7. The method according to any preceding claim, further comprising a step of heating the press plate (310) to between 60 and 90 degrees or between 70 and 80 degrees Celsius or around 75 degrees Celsius before the press-height (311) embosses the wooden top layer (230') and the substrate (240') of the workpiece (200').

8. The method according to any preceding claim, such that the workpiece (200') has a temperature of between 50 and 60 degrees Celsius or between 52 and 58 degrees Celsius, or between 54 and 56 degrees Celsius after the step of moving the press (330) towards the press plate (310).

9. The method according to any preceding claim, wherein the press-height (311) protrudes from the work surface (310A) by between 1mm and 3mm or between 1mm and 1.4mm or around 1.2mm.

10. A covering panel (200) with a bevelled edge (250) obtained by the method of any of claims 1 to 9.

11. A pressure apparatus (300) for forming a bevel (250) in a workpiece (200') comprising a wooden top layer (230'), the pressure apparatus (300) comprising a press (330) and a press plate (310) provided with at least one extended press-height (311) comprising an oblique surface (312) adapted to emboss a surface, the oblique surface (312) provided at an angle relative to the press plate (310) of between 10 and 30 degrees.

12. The pressure apparatus (300) of claim 11, wherein the oblique surface (312) is provided at an angle relative to the press plate (310) of around 20 degrees.

13. The pressure apparatus (300) of claim 11 or 12, wherein the press-height (311) protrudes from the press plate (310) by between 1mm and 3mm or between 1mm and 1.4mm or around 1.2mm.

14. Use of a pressure apparatus (300) according to any one of claims 11 to 13 to form a bevel (250) in a workpiece (200').

15. A method for manufacturing a plurality of wood topped covering panels (200) each comprising a bevelled edge (250) from a plurality of workpieces (200'), wherein expansion or shrinkage of one of the workpieces (200') relative to the other workpiece (200') is avoided during manufacture, the method comprising the steps of:
- manufacturing a first wood topped covering panel (200) according to the method of any of claims 1 to 9 from a first workpiece (200'), wherein the press plate (310) is maintained at a substantially constant temperature; and
- manufacturing a second wood topped covering panel (200) according to the method of any of claims 1 to 9 from a second workpiece (200'), wherein the press plate (310) is maintained at the same substantially constant temperature,
such that the expansion or shrinkage of either of the first workpiece (200') or the second workpiece (200') relative to the other workpiece (200') is avoided.
